# EUROPÄISCHE PATENTSCHRIFT

(11) **EP 0 650 530 B1**
(45) Veröffentlichungstag und Bekanntmachung des Hinweises auf die Patenterteilung: **04.09.1996**
(21) Anmeldenummer: 93915795.4
(22) Anmeldetag: 05.07.1993
(51) Int. Cl.: C14C 9/02, C14C 11/00, C08F 220/16, C08F 222/02, C08F 222/04, C08F 222/06

(54) **NEUE LEDERFETTUNGSMITTEL UND IHRE VERWENDUNG**
NEW GREASES FOR LEATHER AND THEIR USE
NOUVEAUX AGENTS DE GRAISSAGE DU CUIR ET LEUR UTILISATION

(30) Priorität: 14.07.1992 DE 4223111
(43) Veröffentlichungstag der Anmeldung: 03.05.1995
(73) Patentinhaber: Henkel Kommanditgesellschaft auf Aktien, 40191 Düsseldorf (DE)
(72) Erfinder: RITTER, Wolfgang, D-42781 Haan (DE); SITZ, Hans-Dieter, D-41569 Rommerskirchen (DE); ZAUNS HUBER, Rudolf, D-40589 Düsseldorf (DE); RUSCHEINSKY, Emil, D-50381 Leverkusen (DE)
(86) Internationale Anmeldenummer: EP9301730
(87) Internationale Veröffentlichungsnummer: WO9401587

(56) Entgegenhaltungen:
- EP-A- 0 341 578
- EP-A- 0 418 661
- WO-A-93/05188
- DATABASE WPI Week 9029, Derwent Publications Ltd., London, GB; AN 90-220781

## Beschreibung

Die Fettung pflanzlich und/oder mineralisch gegerbter Leder beziehungsweise Pelzfelle ist ein essentieller Verfahrensschritt in der Ausrüstung zum gebrauchsfertigen Wertstoff. Die Form der Fettverteilung in der Hautsubstanz und das Ausmaß der Einbindung der Fettkomponenten in die Hautsubstanz beeinflussen die Eigenschaften und die Gebrauchsfähigkeit der Fertigprodukte entscheidend. Es besteht dabei umfangreiches Fachwissen zu möglichen Interaktionen zwischen den Fettkomponenten einerseits und der gegerbten, sowie Restgerbstoffe enthaltenden Hautsubstanz andererseits. Der bestimmte Aufbau der Fettungsmittel - beispielsweise das Ausmaß ihrer lipophilen Gruppen und gegebenenfalls vorliegenden Reaktivgruppen zur Umsetzung mit geeigneten Reaktivbestandteilen im gegerbten Leder - bestimmen unter anderem die Dauerhaftigkeit und Wirkung der fettenden Ausrüstung im praktischen Gebrauch der Leder- und Pelzwaren.

Ein für die Praxis wichtiger Aspekt liegt in der Schaffung von fettenden Ausrüstungsmitteln, die in der gegerbten Hautsubstanz so zuverlässig gebunden werden können, daß eine für die praktischen Bedürfnisse hinreichende Wasch- und Reinigungsbeständigkeit der Leder-und Pelzwaren sichergestellt ist. Hochwertige Lederwaren, beispielsweise aus der Bekleidungsindustrie, sollen dabei sowohl der wäßrig-tensidischen Wäsche als auch gegebenenfalls einer chemischen Reinigung ohne wesentliche Qualitätseinbuße zugänglich sein. Für Sonderfälle wird die weiterführende Bedingung hinreichender Wasserdichtigkeit des fertig ausgerüsteten Leders gewünscht.

Zur wasserdichten Ausrüstung von Leder oder Pelzen sind insbesondere drei Verfahrensprinzipien bekannt:
1. Imprägnierung durch Einlagerung wasserunlöslicher Verbindungen, zum Beispiel feste Fette, Wachse oder spezielle Polymere,
2. Imprägnierung durch Einlagerung wasserquellender Verbindungen, die bei Wasseraufnahme hochviskose Emulsionen bilden und die Faserzwischenräume des Leders verstopfen, zum Beispiel spezielle Emulgatoren vom W/O-Typ,
3. Behandlung mit hydrophobierend wirkenden Verbindungen, zum Beispiel Aluminium-, Chrom- und/oder Zirkonkomplexe, Silkone oder organische Fluorverbindungen.

Die DE 1 669 347 beschreibt die Anwendung von wasseremulgierbaren Sulfobernsteinsäure-Halbestern zum Fetten von Leder, wobei jedoch noch keine Wasserdichteffekte erzielt werden. Gegenstand der EP 193 832 ist ein Verfahren zur Herstellung wasserdichter Leder oder Pelze unter Verwendung von Sulfobernsteinsäure-Monoestern in Kombination mit imprägnierenden und/oder hydrophobierenden Fettungsmitteln, wobei das Kennzeichen dieses Verfahrens darin liegt, daß man die Leder oder Pelze im Anschluß an die Nachgerbung in wäßriger Flotte mit imprägnierenden und/oder hydrophobierenden Fettungsmitteln behandelt, die Sulfobernsteinsäure-Monoester-Salze mit C₁₂₋₂₄-Fettresten enthalten, und nach Absäuern durch Zugabe eines Chrom-, Zirkon- und/oder Aluminiumsalzes fixiert. Bevorzugt werden die Sulfobernsteinsäure-Monoester-Salze mit imprägnierenden Fettungsmitteln aus der Gruppe oxidierte oder oxidierte und teilsulfierte C₁₈₋₂₆-Kohlenwasserstoffe oder C₃₂₋₄₀-Hachse, Phosphorsäuremono-C₁₂₋₂₄-Alkylester, Citronensäuremono-C₁₆₋₂₄-Alkylester, Sorbitan-, Glycerin- und/oder Pentaerythrit-C₁₆₋₂₄-Fettsäureester eingesetzt.

In jüngster Zeit werden für die fettende Ausrüstung von insbesondere mineralisch gegerbten Ledern und Pelzen amphiphile Mittel beschrieben, die bestimmt ausgewählte Co-Oligomere von einerseits hydrophoben beziehungsweise oleophilen Monomeren und andererseits hydrophilen Monomerbestandteilen darstellen. Amphiphile Mittel dieser Art können in Form wäßriger Dispersionen, Emulsionen und/oder Lösungen nach Abschluß der Hauptgerbung in die auszurüstenden Leder oder Felle eingearbeitet - beispielsweise eingewalkt - werden. Insbesondere im Fall mineralisch gegerbter Leder oder Pelzfelle können diese amphiphilen Mittel gleichzeitig die Funktion der Nachgerbung übernehmen. Es kann schließlich eine abschließende Fixierung der amphiphilen Mittel mit insbesondere Mineralgerbstoffen vorgesehen sein. Die jüngere Patentliteratur beschreibt Hilfsstoffe der hier betroffenen Art. So sind zum Beispiel in der EP 372 746 entsprechende Mittel und ihre Anwendung beschrieben, wobei die amphiphilen Copolymere aus einem überwiegenden Anteil wenigstens eines hydrophoben Monomeren und einem untergeordneten Anteil wenigstens eines copolymerisierbaren hydrophilen Monomeren gebildet sind. Als hydrophobe Monomere sind aufgezählt: langkettige Alkyl(meth)acrylate, langkettige Alkoxy- oder Alkylphenoxy(polyethylen-oxid)-(meth)-acrylate, pimäre Alkene, Vinylester von lankettigen Alkylcarbonsäuren und deren Gemische. Die in geringerem Anteil vorliegenden hydrophilen Comonomeren sind ethylenisch ungesättigte wasserlösliche Säuren oder hydrophile basische Comonomere. Das Molekulargewicht (Gewichtsmittel) der Copolymeren liegt im Bereich von 2.000 bis 100.000.

Die EP 412 389 beschreibt als Mittel zum Hydrophobieren von Leder und Pelzfellen den Einsatz von Copolymerisaten, die durch radikalische Copolymerisation von (a) C₈₋₄₀-Monoolefinen mit (b) ethylenisch ungesättigten C₄₋₈-Dicarbonsäureanhydriden nach Art einer Substanzpolymerisation bei Temperaturen von 80 bis 300°C zu Copolymerisaten mit Molmassen von 500 bis 20.000 g/Mol, anschließende Solvolyse der Anhydridgruppen der Copolymerisate und zumindest partielle Neutralisation der bei der Solvolyse entstehenden Carboxylgruppen in wäßrigem Medium mit Basen hergestellt worden sind und die in Form von wäßrigen Dispersionen oder Lösungen vorliegen. In der EP 418 661 wird zum gleichen Zweck die Verwendung von Copolymerisaten beschrieben, die (a) 50 bis 90 Gew.-% C₈₋₄₀-Alkyl-(meth)acrylate, Vinylester von C₈₋₄₀-Carbonsäuren oder deren Mischungen und (b) 10 bis 50 Gew.-% monoethylenisch ungesättigte C₃₋₁₂-Carbonsäuren, monoethylenisch ungesättigte Dicarbonsäureanhydride, Halbester oder Halbamide von monoethylenisch ungesättigten C₄₋₁₂-Dicarbonsäuren, Amide von C₃₋₁₂-Monocarbonsäuren oder Mischungen davon einpolymerisiert enthalten und Molmassen von 500 bis 30.000 g/Mol besitzen. Die Copolymerisate liegen in zumindest partiell neutralisierter Form in wäßriger Lösung oder in wäßriger Dispersion für den angegebenen Einsatzzweck vor.

Untersuchungen der Anmelderin haben gezeigt, daß für das rasche und gleichmäßige Eindringen von Fettungsmitteln dieser Art vergleichsweise niedere Molmassen von entscheidender Bedeutung sein können. Für den Polymerchemiker finden sich entsprechende mittelbare Hinweise auch in den drei zuletzt genannten Druckschriften bei der Schilderung der Herstellung der dort jeweils beschriebenen Copolymertypen. Die radikalische Copolymerisation der jeweils beanspruchten Komponenten zu (a) und (b) soll zweckmäßigerweise in Gegenwart von Kettenüberträgern wie Mercaptanen (EP 372 746 A2, Seite 6, 20/21) beziehungsweise in Gegenwart von Reglern wie C₁₋₄-Aldehyde, Allylalkohol, Buten-1-ol-3, Ameisensäure oder organische SH-Gruppen enthaltende Verbindungen vorgenommen werden (EP 418 661 A1, Spalte 6, Absatz 2). Auch in der EP 412 389 wird die Mitverwendung entsprechender Regler zur Gewinnung hinreichend niedrig molekularer Polymerisate empfohlen, siehe dort Al, Spalte 4, Absatz 2.

Gegenstand der älteren Patentanmeldung DE-A-P 41 29 244.8 der Anmelderin ist die Verwendung wäßriger Dispersionen von Co-Oligomeren aus der radikalisch ausgelösten wäßrigen Emulsionscopolymersation im schwach sauren bis neutral eingestellten pH-Bereich von
(a) Halbestern der Maleinsäure mit oleophilen Alkoholen und/oder deren niederen Alkylenoxidaddukten und
(b) Acrylsäure und/oder Methacrylsäure
als Hauptkomponenten, die auch zusätzlich
(c) untergeordnete Mengen von weiteren hydrophilen und/oder oleophilen Comonomeren im Oligomeren-Molekül enthalten können, als amphiphiles Mittel zur fettenden und auswaschfesten Ausrüstung von Leder und Pelzfellen.

Die erfindungsgemäße Lehre will eine für das hier vorgegebene Anwendungsgebiet der fettenden Ausrüstung von Ledern und Pelzen bisher nicht beschriebene Co-Oligomerenklasse einsetzen. Die erfindungsgemäß ausgewählten Co-Oligomeren führen dabei sowohl im Rahmen ihrer Herstellung als auch bei ihrem Einsatz in Leder und Pelzfellen zu wichtigen Vorteilen. Schwerpunkt der erfindungsgemäßen Lehre ist dabei die Auswahl der oleophilen Comonomer-Hauptkomponente in den im nachfolgenden beschriebenen Co-Oligomeren. Die Erfindung sieht hier den Einsatz von Fettcrotonaten vor, deren Verwendung als oleophile Hauptkomponente in amphiphilen Zurichtungsmitteln der betroffenen Art im Stand der Technik bisher nicht beschrieben ist. Crotonsäure und Crotonsäureester sind der radikalischen Copolymerisation mit hydrophilen Comonomeren der hier betroffenen Art zwar zugänglich, die Copolymerisation ist aber im Verhältnis zu den nach den Angaben des Standes der Technik ausgewählten Comonomeren vergleichsweise schwer durchführbar. Crotonsäure beziehungsweise Crotonate führen insbesondere zu einem vergleichsweise raschen Kettenabbruch. Die Erfindung macht hiervon gezielt Gebrauch. Die im nachfolgenden für den Anwendungszweck der Leder- und Pelzausrüstung beschriebenen Co-Oligomeren auf Fettcrotonatbasis haben vergleichsweise einheitliche und dabei beschränkte Molgewichte auch ohne die Mitverwendung von molgewichtsregelnden Kettenüberträgern. Co-Oligomere auf Fettcrotonatbasis sind damit zur raschen und durchdringenden imprägnierenden Ausrüstung von Leder und/oder Pelzen besonders geeignet. Die Co-Oligomeren können nach ihrem Eintrag in die Haut- beziehungsweise Faserstruktur fest und zuverlässig darin verankert werden, so daß waschechte und auch reinigungsfeste Leder und Pelzfelle zugänglich werden. Durch an sich bekannte Abstimmung der jeweiligen Mengenverhältnisse von oleophilen Anteilen und hydrophilen Anteilen im amphiphilen Co-Oligomeren läßt sich nicht nur eine zuverlässige Fettung sondern gewünschtenfalls auch die wasserdichte Ausrüstung im Fertigmaterial einstellen.

### Gegenstand der Erfindung

Gegenstand der Erfindung ist dementsprechend in einer ersten Ausführungsform die Verwendung von wasserdispergierbaren und/oder wasseremulgierbaren Co-Oligomeren aus
(a) Fettcrotonaten und
(b) radikalisch copolymerisierbaren hydrophilen ethylenisch ungesättigten Säuren und/oder deren Anhydriden, die auch
(c) untergeordnete Mengen weiterer copolymerisierbarer Comonomere enthalten können,
als amphiphiles Mittel zur fettenden und gewünschtenfalls wasserdichten Ausrüstung von Leder und Pelzfellen.

Die Lehre der Erfindung kann in dieser Ausführungsform insbesondere wichtig für die Ausrüstung mineralisch gegerbter Leder und/oder Pelzfelle sein, wobei im Rahmen dieser Behandlung die zuvor geschilderten amphiphilen Mittel der Erfindung gleichzeitig auch eine nachgerbende Funktion übernehmen beziehungsweise ausüben können.

Gegenstand der Erfindung sind in einer weiteren Ausführungsform wäßrige Dispersionen der amphiphilen Co-Oligomeren aus den zuvor definierten Komponenten (a) und (b) sowie gegebenenfalls (c), wobei die Gewichtsverhältnisse von (a) zu (b) im Bereich von 30 bis 90 Gew.-% (a) zu 70 bis 10 Gew.-% (b) - Gew.-% bezogen auf die Summe von (a) + (b) - liegen, die wäßrigen Dispersionen auf pH-Werte im Bereich von neutral bis schwach basisch eingestellt sind und insbesondere als wasserverdünnbare wäßrig-pastöse Massen mit Wertstoffgehalten im Bereich von etwa 30 bis 75 Gew.-% ausgebildet sind.

### Einzelheiten zur Erfindung und ihren Ausführungsformen

Tragendes Element der erfindungsgemäßen Lehre ist die Verwendung der amphiphilen Co-Oligomeren unter Einsatz von Fettcrotonaten als Hauptbestandteil der oleophilen Bausteine im Oligomermolekül. Bevorzugt werden Co-Oligomere verwendet, die als Komponente (a) Ester beziehungsweise Estergemische aus Crotonsäure und C₁₀₋₄₀-Fettalkoholen enthalten. Besonders wichtige Komponenten (a) sind Fettcrotonate auf Basis von C₁₂₋₂₄-Fettalkoholen. Hierbei können entsprechende Crotonsäureester mit wenigstens überwiegend geradkettigen Fettalkoholen bevorzugt sein. Es hat sich allerdings gezeigt, daß auch die Mitverwendung von verzweigtkettigen Fettalkoholen in der Komponente (a) im Einzelfall zu interessanten Ergebnissen führen kann. So kann beispielsweise durch Mitverwendung von solchen verzweigtkettigen Alkoholen im beschränkten Ausmaß die Penetrationsfähigkeit des Co-Oligomeren in die Faserstruktur des auszurüstenden Hautmaterials gefördert werden. Dabei ist es auch möglich entsprechende verzweigte Alkohole einer kürzeren C-Zahl einzusetzen, wobei entsprechende Komponenten mit wenigstens 6 C-Atomen, vorzugsweise mit wenigstens 8 C-Atomen, in Betracht kommen. Ein wichtiger verzweigtkettiger Alkohol, der im Zusammenhang mit den Fettcrotonaten der Komponente (a) zum Einsatz kommen kann, ist das 2-Ethylhexanol. Die Menge der mitzuverwendenden verzweigtkettigen insbesondere kürzeren Alkohole wird allerdings immer vergleichsweise beschränkt sein. So werden in der Regel nicht mehr als 50 Gew.-%, vorzugsweise nicht mehr als 30 oder nicht mehr als 20 Gew.-% der in (a) vorliegenden Alkoholreste durch solche verzweigtkettigen insbesondere niederen Alkohole gebildet. Für das praktische Arbeiten haben sich-bezogen auf die oleophile Comonomerkomponente (a) - Mengenverhältnisse von wenigstens etwa 90-95 Gew.-% der ausgeprägt oleophilen langkettigen Fettalkohole, insbesondere des Bereichs C₁₂₋₁₈, als besonders geeignete Komponenten zur Ausbildung der Crotonatester erwiesen.

Die in den erfindungsgemäßen amphiphilen Co-Oligomeren zum Einsatz kommenden hydrophilen Komponenten (b) können den entsprechenden Bausteinen aus den Co-Oligomeren der zitierten EP 372 746, 412 389 und 418 661 entsprechen. Insbesondere die zuletzt genannte Druckschrift bringt hier ausführliche Angaben zu geeigneten Stoffklassen und zahlreichen speziellen Vertretern. Auf diese Angaben des Standes der Technik wird hiermit zum Zwecke der vorliegenden Erfindungsoffenbarung ausdrücklich Bezug genommen.

Besonders wichtige Comonomerkomponenten (b) im Sinne der vorliegenden Erfindung sind ethylenisch ungesättigte Monocarbonsäuren und/-oder ethylenisch ungesättigte Dicarbonsäuren und/oder deren Anhydride mit bevorzugt jeweils bis zu 12 C-Atomen. Die Dicarbonsäuren können auch wenigstens anteilsweise in Form ihrer Partialderivate mit einer Carboxylgruppe und einer derivatisierten Carbonsäuregruppe zum Beispiel als Dicarbonsäure-Halbester vorliegen.

Besonders interessante Vertreter aus der Klasse monoethylenisch ungesättigter C₃₋₁₂-Monocarbonsäuren sind beispielsweise Acrylsäure, Methacrylsäure und die Crotonsäure. Besonders geeignet können für die erfindungsgemäße Lehre als Comonomere (b) aber auch Dicarbonsäuren beziehungsweise deren Derivate, insbesondere deren Anhydride, eingesetzt werden beziehungsweise vorliegen. Typische Vertreter sind die Maleinsäure, Fumarsäure, Itaconsäure, Glutaconsäure und entsprechende Anhydride. Besondere Bedeutung kann hier im Rahmen der Herstellung der Co-Oligomeren dem Maleinsäureanhydrid (MAH) zukommen. Fettcrotonate der erfindungsgemäß als Komponente (a) eingesetzten Art und Maleinsäureanhydrid lassen sich in befriedigender Weise mit oder ohne Verwendung von Hilfslösungsmitteln zu Co-Oligomeren eines leicht einstellbar niedrigen Molgewichtes umsetzen. Es ist dabei insbesondere möglich, etwa gleiche Molmengen an MAH und Fettcrotonat miteinander zur Umsetzung zu bringen, so daß nach Solvolyse, insbesondere Hydrolyse der MAH-Bausteine einerseits hinreichend hohe Konzentrationen an Carboxylgruppen für die Fixierung der Oligomeren in der Haut- beziehungsweise Faserstruktur zur Verfügung stehen, andererseits aber auch zuverlässig hohe Gehalte des oleophilen und damit fettenden und wasserabweisenden Fettcrotonat-Baustein eingebunden sind.

Neben oder anstelle dieser hydrophilen Oligomerkomponenten zu (b) auf Basis von Carbonsäuren sind aber auch andere copolymerisierbare hydrophile Verbindungen als Komponente (b) verwendbar. In Betracht kommen hier insbesondere Sulfosäuregruppen enthaltende ethylenisch ungesättigte Monomere. Bekannte Vertreter dieser Art sind insbesondere entsprechende aliphatische und/oder aromatische Sulfonsäuren, wie Styrolsulfonsäure aber auch Verbindungen wie Vinylsulfonsäure, Allylsulfonsäure, Methallylsulfonsäure und dergleichen. Wie bereits angegeben kann die Komponente (b) der erfindungsgemäß zu verwendenden amphiphilen Mittel ganz oder teilweise aus solchen der Copolymerisation beziehungsweise Co-Oligomerisation zugänglichen Sulfosäureverbindungen gebildet sein.

Erfindungsgemäß wird es bevorzugt als amphiphile Wirkstoffe Co-Oligomere der geschilderten Art zu verwenden, in denen die Komponenten (a) und (b) in Verhältnissen von 30 bis 90 Gew%(a) auf 70 bis 10 Gew.-% (b) vorliegen - Gew.-% hier bezogen auf die Summe der Komponenten (a) und (b). Bevorzugte Bereiche für die Mischungsverhältnisse sind etwa 35 bis 80 Gew.-% (a) auf 65 bis 20 Gew.-% (b)-auch hier Gew.-% bezogen auf die Summe von (a) und (b).

Wie zuvor angegeben fällt es allerdings in den Rahmen der Erfindung, neben den Bausteinen (a) und (b) in den amphiphilen Co-Oligomeren auch untergeordnete Mengen weiterer copolymerisierbarer Comonomere einzusetzen, die in der erfindungsgemäßen Definition als Komponenten (c) bezeichnet sind. Geeignet können hier beliebige der Co-Oligomerisation zugängliche ethylenisch ungesättigte Verbindungen sein, wie sie im einschlägigen Stand der Technik beschrieben sind, vgl. hier beispielsweise EP 418 661 Al, Spalte 3, 49 bis Spalte 4, 27. In der Regel handelt es sich hier um Comonomere, die weder eine ausgeprägte hydrophobierende Wirkung aufweisen noch hydrophilierende Gruppen im Sinne der Carboxylgruppen oder Sulfonsäuregruppen der erfindungsgemäß mitverwendeten Komponenten zu (b) besitzen. Werden solche Comonomere (c) in den erfindungsgemäß beschriebenen amphiphilen Co-Oligomeren mitverwendet, so beträgt ihr Anteil vorzugsweise nicht mehr als etwa 30 Gew.-% und insbesondere nicht mehr als etwa 15 Gew.-% - Gew.-% hier allerdings bezogen auf die Summe von (a), (b) und (c).

Besonders geeignete Co-Oligomere für den erfindungsgemäßen Zweck sind von solchen Mischungskomponenten zu (c) frei oder praktisch frei (nicht mehr als etwa 5 Gew.-%) und enthalten dabei die Komponenten (a) und (b) in Mischungsverhältnissen von etwa 40 bis 70 Gew.-% (a) auf 60 bis 30 Gew.-% (b) - Gew.-% hier wieder bezogen auf die Summe von (a) + (b).

Die Co-Oligomeren auf Basis der Fettcrotonate weisen bevorzugte mittlere Molgewichte (Molmassen) im Bereich von etwa 500 bis 30.000 g/Mol auf. Geeignet können dabei insbesondere Molmassen im Bereich von etwa 1.000 bis 15.000 g/Mol sein. Es hat sich gezeigt, daß innerhalb dieser vergleichsweise breiten Bereiche den unteren Werten-mittlere Molgewichte beziehungsweise Molmassen im Bereich von etwa 1.000 bis 4.000 oder 5.000 g/Mol und zweckmäßigerweise im Bereich von etwa 1.000 bis 3.000 g/Mol - besondere Bedeutung zukommen kann.

Wie bereits angegeben sind besonders geeignete amphiphile Mittel der erfindungsgemäßen Lehre der Stoffklasse aus der Umsetzung von Fettcrotonaten und Maleinsäureanhydrid zuzuordnen, deren MAH-Anteil durch Hydrolyse und/oder Solvolyse mit H-aktiven Komponenten zum Oligomer-Molekül mit freien Carboxylgruppen umgewandelt worden ist.

Zur Solvolyse des MAH-Ringes mit H-aktiven Komponenten eignen sich insbesondere Alkohole aber auch andere Verbindungen wie Carbonsäuren, reaktiven Wasserstoff enthaltende Aminoverbindungen und dergleichen. Durch eine solche gezielte Solvolyse des MAH-Anteiles im Oligomeren kann gezielt Einfluß genommen werden auf eine Verstärkung der fettenden beziehungsweise wasserabweisenden Eigenschaften der erfindungsgemäß zu verwendenden amphiphilen Mittel. Hier kann durch Mitverwendung hinreichend langer Kohlenwasserstoffreste das Verhältnis von oleophilen zu hydrophilen Gruppen in Richtung auf die wasserabweisenden oleophilen Elemente verschoben werden.

Der Zugang zu den amphiphilen Co-Oligomeren ist aber auch beispielsweise auf folgende Art möglich: In einer ersten Verfahrensstufe werden die freie Crotonsäure und Maleinsäureanhydrid miteinander zur Oligomerverbindung umgesetzt. Anschließend wird unter Ausschluß von Wasser und raschem Austrag des Kondensationswassers eine Veresterung der Crotonsäurebestandteile mit den gewünschten Fettalkoholen beziehungsweise Fettalkoholgemischen vorgenommen. Nachfolgend ist dann die Hydrolyse beziehungsweise Solvolyse der Anhydridringe zu den letztlich gewünschten amphiphilen Mitteln möglich.

Die letztlich zum Einsatz kommenden Co-Oligomeren liegen erfindungsgemäß zweckmäßigerweise in Form wäßriger Dispersionen und/oder Emulsionen vor, die bevorzugt auf einen schwach sauren bis schwach alkalischen Bereich eingestellt worden sind. Zur Lagerstabilität kann es zweckmäßig sein, Anbietungsformen vorzusehen, deren wäßrige Phase durch Zugabe von anorganischen und/oder organischen Basen auf neutrale bis schwach alkalische pH-Werte eingestellt ist. Zur pH-Regulierung eignen sich alle im einschlägigen Stand der Technik beschriebenen Basen, vgl. auch hierzu die Angaben des eingangs zitierten Standes der Technik. Besonders bevorzugt sind die Alkalisalze, insbesondere des Natriums und/oder Kaliums. Aber auch Ammoniumsalze oder Salze von Alkanolaminen wie Diethanolamin sind geeignete Vertreter. Bevorzugte pH-Werte für lagerstabile Produkte können im Bereich um pH 7 bis 8 liegen. Es können auf diese Weise wäßrig-pastöse Massen hergestellt werden, deren Co-Oligomer-Wertstoffgehalt beispielsweise im Bereich von etwa 30 bis 70 oder 75 Gew.-% liegt. Solche pastösen Massen sind mit Wasser und/oder wäßrigen Wirkstoffabmischungen der im nachfolgenden geschilderten Art jederzeit aufzumischen und zum praktischen Einsatz zu bringen.

In einer wichtigen Ausführungsform der Erfindung werden amphiphile Mittel der geschilderten Art zusammen mit ausgewählten Emulgatoren eingesetzt, die beim Eintrag in insbesondere mineralgegerbte Leder und/oder Felle eine zusätzliche Fettung beziehungsweise Hydrophobierung bewirken und bevorzugt gleichzeitig über saure Gruppen im gegerbten Leder beziehungsweise Fell fixiert werden können. Ein wichtiges Beispiel für Verbindungen dieser Art sind die eingangs genannten in Wasser emulgierbaren Sulfobernsteinsäure-Halbester, die von langkettigen Fettalkoholen und/oder ihren Alkylenoxidaddukten abstammen. Zur bestimmten Beschaffenheit der Alkohole gelten die zuvor im Zusammenhang mit den Fettcrotonaten zu (a) gemachten Angaben. Ein wichtiges Beispiel für die Emulgatorenklasse der hier betroffenen Art sind C18-Sulfosuccinat-Halbester. Es hat sich gezeigt, daß durch die Mitverwendung solcher emulgatorartiger Hilfskomponenten - die an sich als Ausrüstungsmittel für die Lederfettung vorbekannt sind - im Sinne der erfindungsgemäßen Zielsetzung vorteilhafte Wirkungen erreicht werden können. Als Beispiele für Verbindungstypen dieser Art seien im einzelnen hier benannt:

Sulfobernsteinsäure-Halbester langkettiger Fettalkohole mit insbesondere 12 bis 24 C-Atomen und/oder deren Alkylenoxidaddukten mit bevorzugt bis zu 6 Alkylenoxidresten, entsprechende Sulfobernsteinsäure-Halbester von Fettsäuremono- und/oder -diglyceriden beziehungsweise deren Alkylenoxidaddukten mit bevorzugt bis zu 6 Alkylenoxidresten bei weiterhin bevorzugter Kettenlänge der Fettsäure(n) im Bereich C₁₂₋₂₄, langkettige Sulfofettsäuren, insbesondere entsprechende alpha-Sulfofettsäuren mit vorzugsweise 12 bis 24, insbesondere 16 bis 18 C-Atomen, wobei im Falle dieser alpha-substituierten Sulfofettsäuren die Kohlenwasserstoffreste üblicherweise gesättigt sind, sowie innenständige Sulfofettsäuren von olefinisch 1- und/oder mehrfach ungesättigten Carbonsäuren wie Ölsäure, Linolsäure, Linolensäure und dergleichen.

Zusammen mit den Co-Oligomeren im Sinne des erfindungsgemäßen Aufbaus können aber auch Fettungs- beziehungsweise Hydrophobierungsmittel im Sinne der Wertstoffgemische aus der eingangs zitierten EP 193 832 zum Einsatz kommen. In dieser Ausführungsform der Erfindung werden also die erfindungsgemäß definierten Co-Oligomeren aus (a) und (b) sowie gegebenenfalls (c) kombiniert mit imprägnierenden und/oder hydrophobierenden Fettungsmitteln, wie Sulfobernsteinsäuremonoester-Salze mit C₁₂₋₂₄-Fettresten, in Kombination mit weiteren imprägnierenden Fettungsmitteln, ausgewählt insbesondere aus der Gruppe der oxidierten oder oxidierten und teilsulfierten C₁₈₋₂₆-Kohlenwasserstoffe oder C₃₂₋₄₀-Wachse eingesetzt. Andere Beispiele für diese zusätzlichen imprägnierenden Fettungsmittel sind Phosphorsäuremono-C₁₂₋₂₄-Alkylester, Partialester von Polycarbonsäuren wie Citronensäure-Mono-C₁₆₋₂₄-Alkylester, Partialester von Polyalkoholen wie Sorbitan-, Glycerin- oder Pentaerythrit-C₁₆₋₂₄-fettsäureester.

Eine besonders geeignete Emulgatorklasse, die im Rahmen der erfindungsgemäßen Lehre mitverwendet werden kann, sind die aus der Ausrüstung von Ledern und Pelzen mit Fettstoffen bekannten N-Acylaminosäuren, insbesondere Fettsäuresarkoside, z.B. N-Oleoylsarkosin, wie sie beispielsweise als Emulgatoren zum Eintrag von Silikonölen in Leder und Pelze in der EP-B1-0 213 480 im einzelnen beschrieben sind. Geeignete Emulgatoren sind demgemäß insbesondere Salze von N-(C₉₋₂₀-Acyl)-aminosäuren, wobei entsprechenden Salzen einer Aminosäure mit 2 bis 6 C-Atomen, die mit dem Acylrest einer gesättigten oder ungesättigten Fettsäure mit 9 bis 20 C-Atomen am Aminstickstoff, der gegebenenfalls zusätzlich durch Methyl substituiert ist, besondere Bedeutung zukommt. Geeignete Salze dieser Emulgatoren sind wiederum insbesondere Alkali-, Ammonium- oder Alkanolaminsalze.

Von den N-(C₉₋₂₀-Acyl)-aminosäuren sind solche mit 2 bis 4 C-Atomen und mit der Aminogruppe in alpha-Stellung zur Carboxylgruppe besonders bevorzugt, die weiterhin am Aminstickstoffatom zusätzlich durch eine Methylgruppe substituiert sind. Davon weisen eine besonders überlegene Wirkung die Fettsäuresarkoside von gesättigten oder ungesättigten Fettsäuren mit 9 bis 20, bevorzugt 16 bis 18 C-Atomen auf. Das bevorzugte Sarkosid ist das Ölsäuresarkosid. Weiterhin sind insbesondere das N-Stearoyl-sarkosin, N-Lauroyl-sarkosin und N-Isononanoyl-sarkosin besonders geeignet und zwar jeweils in Form ihrer Alkalisalze, Ammoniumsalze oder der Salze von Mono-, Di- oder Trialkanolaminen mit insbesondere 2 bis 4 C-Atomen im Alkanolrest.

Beim Einsatz von solchen Wertstoffgemischen beträgt die Menge der erfindungsgemäß definierten Co-Oligomeren aus (a) und (b) sowie gegebenenfalls (c) bevorzugt wenigstens etwa 35 Gew.-% des Wertstoffgemisches und insbesondere wenigstens etwa 50 Gew.-% - auf gleiche Basis bezogen. Es kann zweckmäßig sein, wenigstens etwa 70 bis 80 Gew.-% des ingesamt in die auszurüstenden Leder beziehungsweise Pelzfelle einzubringenden Wertstoffgemisches auf Basis der erfindungsgemäßen Fettcrotonat-Co-Oligomeren vorzusehen.

Der Eintrag der Co-Oligomeren über ihre Anbietungsform der wäßrigen Dispersion beziehungsweise ihrer Abmischungen mit den genannten weiteren Komponenten erfolgt in an sich bekannter Weise - siehe hierzu insbesondere auch die Angaben der eingangs genannten Druckschriften für vergleichbare Produkte. Nur kurz sei daher zusammenfassend dargestellt:

Die erfindungsgemäßen Co-Oligomer-Dispersionen eigenen sich zur Behandlung von allen üblichen gegerbten Häuten, insbesondere entsprechendem Material, das mit Mineralgerbstoffen gegerbt worden ist. Die gegerbten Häute werden üblicherweise vor der Behandlung entsäuert. Sie können bereits vor der Behandlung gefärbt worden sein. Eine Färbung kann aber auch erst nach der erfindungsgemäß durchgeführten Behandlung vorgenommen werden.

Das zur imprägnierende Leder wird mit den Dispersionen in wäßriger Flotte zweckmäßig bei pH-Werten von etwa 4 bis 10 und vorzugsweise bei pH 5 bis 8 und bei Temperaturen von etwa 20 bis 60°C, vorzugsweise 30 bis 50°C, während eines Zeitraumes bis zu einigen Stunden gegebenenfalls mehrstufig behandelt. Die Behandlung erfolgt beispielsweise durch Walken in einem Faß. Die benötige Menge an Co-Oligomer-Dispersion beträgt üblicherweise 0,1 bis 30 Gew.-%, insbesondere 1 bis 20 Gew.-% bezogen auf das Falzgewicht des Leders oder das Naßgewicht der Pelzfelle. Die Flottenlänge beträgt üblicherweise 10 bis 1.000 %, vorzugsweise 30 bis 150 %, bei Pelzfellen 50 bis 500 %.

Nach Abschluß der Behandlung mit der wäßrigen Flotte wird der pH-Wert der Behandlungsflotte durch Zusatz von Säuren in den leicht sauren Bereich verschoben. Geeignet ist insbesondere der Zusatz organischer Säuren, bevorzugt Ameisensäure. Bevorzugte pH-Werte liegen im Bereich von 3 bis 5, vorzugsweise im Bereich von etwa 3,5 bis 4. Gewünschtenfalls kann eine Fixierung mit insbesondere Mineralgerbstoffen nachgeschaltet werden, wobei hier der Einsatz von Aluminiumsalzen, aber auch von anderen mehrwertigen Mineralsalzen, z.B. Chrom- oder Zirkonsalzen besonders bevorzugt sein kann.

Die nachfolgenden Beispiele beschreiben zunächst die Herstellung erfindungsgemäß geeigneter Co-Oligomere und nachfolgend deren Einsatz zum Ausrüsten von Leder im erfindungsgemäßen Sinne.

### Beispiele

### Beispiel 1

700 g eines C_{16/18}-Fettalkohol-Crotonats (45-55% C₁₆; 45-55% C₁₈-Fettalkohole), 300 g Maleinsäureanhydrid sowie 250 g Xylol wurden in einem 3 1-Reaktor eingewogen. Mit einer konstanten Badtemperatur von 175°C wurde das Reaktionsgemisch bis zum Sieden des Xylols aufgeheizt. Bei einer Innentemperatur von 150°C wurden 47,5 g tert.-Butylperbenzoat in 47,5 g Xylol innerhalb von 2 h zugetropft. Durch die einsetzende Polymerisation stieg die Innentemperatur auf 164°C an. Nach beendeter Initiatordosierung erfolgte eine zweistündige Nachreaktionszeit bei 160°C. Danach wurden nochmals 2,5 g tert.-Butylperbenzoat in 2,5 g Xylol zugegeben. Nach weiteren 2 h Reaktionszeit bei 160°C wurde das Xylol unter Vakuum (50-200 mbar) abgezogen.

Nach dem Abkühlen auf 80°C wurden 1.500 g Wasser und 30,6 g NaOH zugegeben, so daß sich eine teilneutralisierte stabile Dispersion bildete.

| Restmonomere: | |
|---|---|
| C₁₆-Crotonat: | 5,1 % |
| C₁₈-Crotonat: | 6,3 % |
| Maleinsäureanhydrid: | < 0,1 % |

| Molekulargewichte: | |
|---|---|
| Mw: | 2.100 g/Mol |
| Mn: | 1.200 g/Mol |
| Feststoffgehalt: | 40,2 Gew.-% |

### Beispiel 2

600 g eines C_{16/18}-FettalkoholCrotonats (45-55% C₁₆-; 45-55% C₁₈-Fettalkohol). 400 g Maleinsäureanhydrid sowie 176 g Xylol wurden in einen 3 1-Reaktor eingewogen. Mit einer konstanten Badtemperatur von 160°C wurde das Reaktionsgemisch bis zum Sieden des Xylols aufgeheizt. Bei einer Innentemperatur von 150°C wurden 47,5 g tert.-Butylperbenzoat in 117,8 g Xylol innerhalb von 2 h zugetropft. Durch die einsetzende Polymerisation stieg die Innentemperatur auf 169°C an. Nach beendeter Initiatordosierung erfolgte eine zweistündige Nachreaktionszeit bei 150°C. Danach wurden nochmals 2,5 g tert.-Butylperbenzoat in 6,2 g Xylol zugegeben. Nach weiteren 2 h Reaktionszeit bei 150°C wurde das Xylol unter Vakuum (50-200 mbar) abgezogen.

Nach dem Abkühlen auf 80°C wurden 2.333 g Wasser und 54,4 g NaOH zugegeben, so daß sich eine teilneutralisierte stabile Dispersion bildete.

| Restmonomere: | |
|---|---|
| C₁₆-Crotonat: | 3,9 % |
| C₁₈-Crotonat: | 4,3 % |
| Maleinsäureanhydrid: | < 0,01 % |

| Molekulargewichte: | |
|---|---|
| Mw: | 2.000 g/Mol |
| Mn: | 1.350 g/Mol |
| Feststoffgehalt: | 30,1 Gew.-% |

### Beispiel 3

5.600 g eines C_{16/18}-Fettalkohol-Crotonats (45-55% C₁₆; 45-55% C₁₈--Fettalkohol), 2.400 g Maleinsäureanhydrid sowie 1.800 g Xylol wurden in einem 25 1-Reaktor eingewogen. Mit einer konstanten Badtemperatur von 170°C wurde das Reaktionsgemisch bis zum Sieden des Xylols aufgeheizt. Bei einer Innentemperatur von 150°C wurden 400 g tert.-Butylperbenzoat in 600 g Xylol innerhalb von 2 h zugetropft. Die Innentemperatur wurde während der Reaktion bei 150°C gehalten. Nach beendeter Initiatordosierung erfolgte eine zweistündige Nachreaktionszeit bei 150°C. Danach wurden nochmals 80 g tert.-Butylperbenzoat zugegeben. Nach weiteren 2 h Reaktionszeit bei 150°C wurde das Xylol unter Vakuum (50-200 mbar) abgezogen.

Nach dem Abkühlen auf 80°C wurden 16.000 g Wasser und 371 g NaOH zugegeben, so daß sich eine teilneutralisierte stabile Dispersion bildete.

| Restmonomere: | |
|---|---|
| C₁₆-Crotonat: | 5,6 % |
| C₁₈-Crotonat: | 6,1 % |
| Maleinsäureanhydrid: | < 0,1 % |

| Molekulargewichte: | |
|---|---|
| Mw: | 2.100 g/Mol |
| Mn: | 1.300 g/Mol |
| Feststoffgehalt: | 34,4 Gew.-% |

### Beispiel 4

172,2 g Crotonsäure, 206,1 g Maleinsäureanhydrid sowie 100 g Xylol wurden in einem 3 1-Reaktor eingewogen. Mit einer konstanten Badtemperatur von 175°C wurde das Reaktionsgemisch bis zum Sieden des Xylols aufgeheizt. Bei einer Innentempertur von 150°C wurden 18 g tert.-Butylperbenzoat in 64 g Xylol innerhalb von 2 h zugetropft. Die Innentemperatur betrug während der Polymerisation 150°C. Nach beendeter Initiatordosierung erfolgte eine zweistündige Nachreaktionszeit bei 150°C. Danach wurden nochmals 1 g tert.-Butylperbenzoat in 4 g Xylol zugegeben. Nach weiteren 2 h Reaktionszeit wurden 515 g Stenol 1618 (45-55% C₁₆-; 45-55% C₁₈-Fettalkohol) zugegeben. Bei einer Innentemperatur von 160°C erfolgte die azeotrope Veresterung des Polymers mit dem Fettalkohol innerhalb von 7 h. Es wurden 34,1 g Wasser erhalten, was einem Veresterungsumsatz von 95 % entspricht. Nach beendeter Veresterung wurde das Xylol im Vakuum (50-200 mbar) abgetrennt.

Nach dem Abkühlen auf 80°C wurden 1.340 g Wasser und 40 g NaOH zugegeben, so daß sich eine teilneutralisiete stabile Dispersion bildete.

| Restmonomere: | |
|---|---|
| Stenol 1618: | 4,7 % |
| Maleinsäureanhydrid: | 0,15 % |
| Crotonsäure: | 0,05 % |

| Molekulargewichte: | |
|---|---|
| Mw: | 10.600 g/Mol |
| Mn: | 1.000 g/Mol |
| Feststoffgehalt: | 40,1 Gew.-% |

### Beispiel 5

Die nach den in den Beispielen 1 bis 4 hergestellten Produkte wurden nach der am Ende dieses Beispiels beschriebenen ledertechnischen Arbeitsweise (Rezeptur) eingesetzt und ausgetestet.

Die in der Tabelle I aufgeführten, als gut und sehr gut zu bewertenden Ergebnisse für die Hydrophobierung, geprüft mit dem Bally-Penetrometer gemäß der Messmethode IUP 10, der Internationalen Union der Leder-Chemiker-Verbände, Kommission für physikalische Lederprüfung, vgl. das Leder, Band 12, 36 - 40 (1961), wurden erhalten.

**Tabelle I**

| Penetrometerwerte bei 15% Stauchung | | | | |
|---|---|---|---|---|
| Beispiele | 1 | 2 | 3 | 4 |
| Wasserdurchtritt | > 420 < 24 | >24 | >420 | 180 |
| Wasseraufnahme 24h | 30% | 28% | 35% | 58% |

Die Prüfung der Waschbarkeit und chemischen Reinigungsechtheit wurden nach folgenden Verfahren durchgeführt:

Die klimatisierten Versuchsleder werden als Quadrate von 10 cm x 10 cm ausgestanzt. Sie werden genau gemessen, die Fläche wird bestimmt und das Gewicht vor dem Waschen und dem chemischen Reinigen ermittelt.

### a) Waschversuche

Die Lederproben werden einzeln in 60°C warmem Wasser mit phosphatfreiem Textilwaschmittel (Persil ^{(R)}) gewaschen. Der Versuch soll praxisnah die Waschbedingungen eines Sportschuhes in einer Haushaltswaschmaschine reproduzieren. Nach dem Waschen werden die Leder an der Luft getrocknet.

### b) Chemische Reinigung

Die Leder werden einzeln mit Perchlorethylen in einer chemischen Reinigungsmaschine gereinigt. Nach der Reinigung werden die Versuchsleder abgelüftet.

Die Leder werden, nach dem Waschversuch (a) und der chemischen Reinigung (b), 24 Stunden nach DIN 53303 klimatisiert. Die Kennzahlen werden für beide Versuche ermittelt und bewertet.

Die erhaltenen hervorragenden Ergebnisse sind aus der nachfolgenden Tabelle II ersichtlich:

**Tabelle II**

| Waschbarkeit und chemische Reinigungsechtheit | | | | | |
|---|---|---|---|---|---|
| Beispiele | | 1 | 2 | 3 | 4 |
| Waschbarkeit | m | +1,02% | +2,5% | +2,6% | +2,8% |
| | F | -5,9% | -5,9% | -5,8% | -6,1% |
| chemische Reinigungsechtheit | m | -5,6% | -5,7% | -5,6% | -5,6% |
| | F | -6,6% | -6,9% | -6,8% | -7,0% |
| m = Gewichtsdifferenz (- = Abnahme; + = Zunahme) | | | | | |
| F = Flächendifferenz (- = Abnahme; + = Zunahme) | | | | | |

Die Ausrüstung der untersuchten Materialproben erfolgte dabei gemäß der nachfolgenden Arbeitsanweisung:

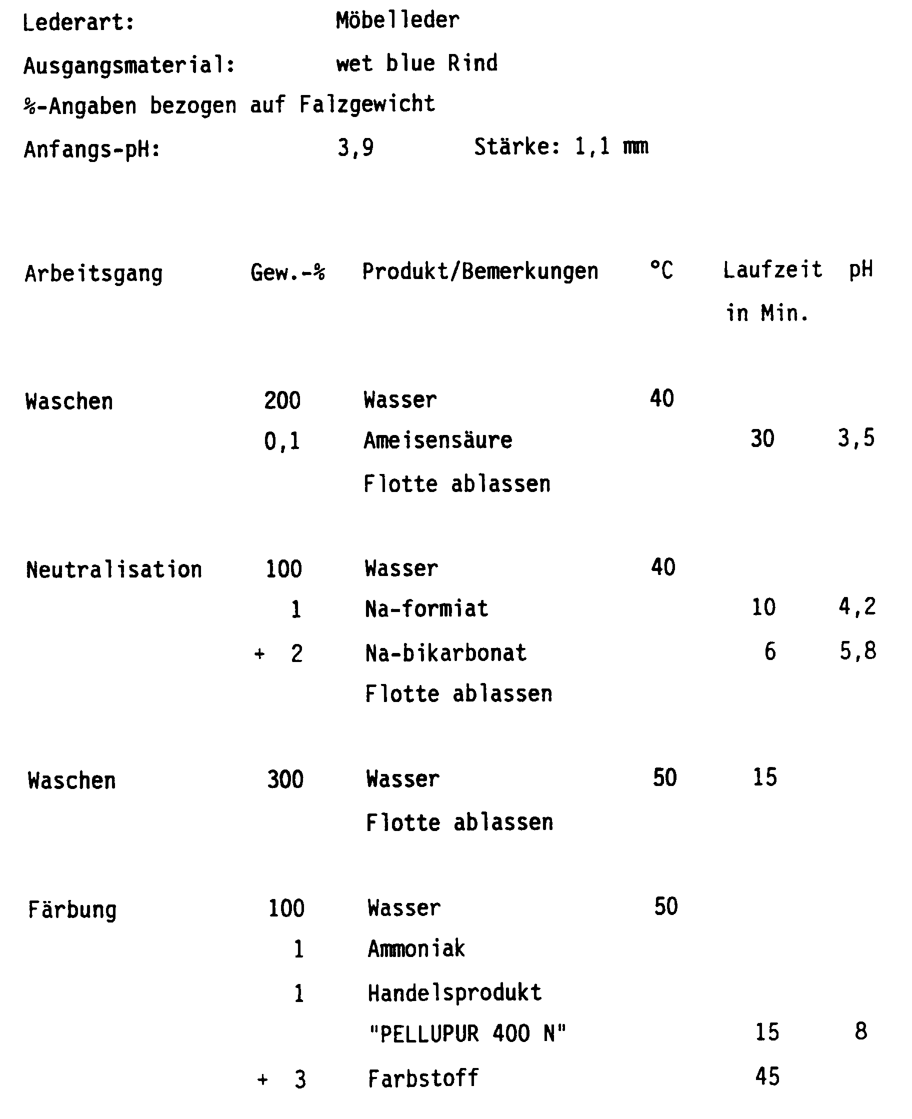

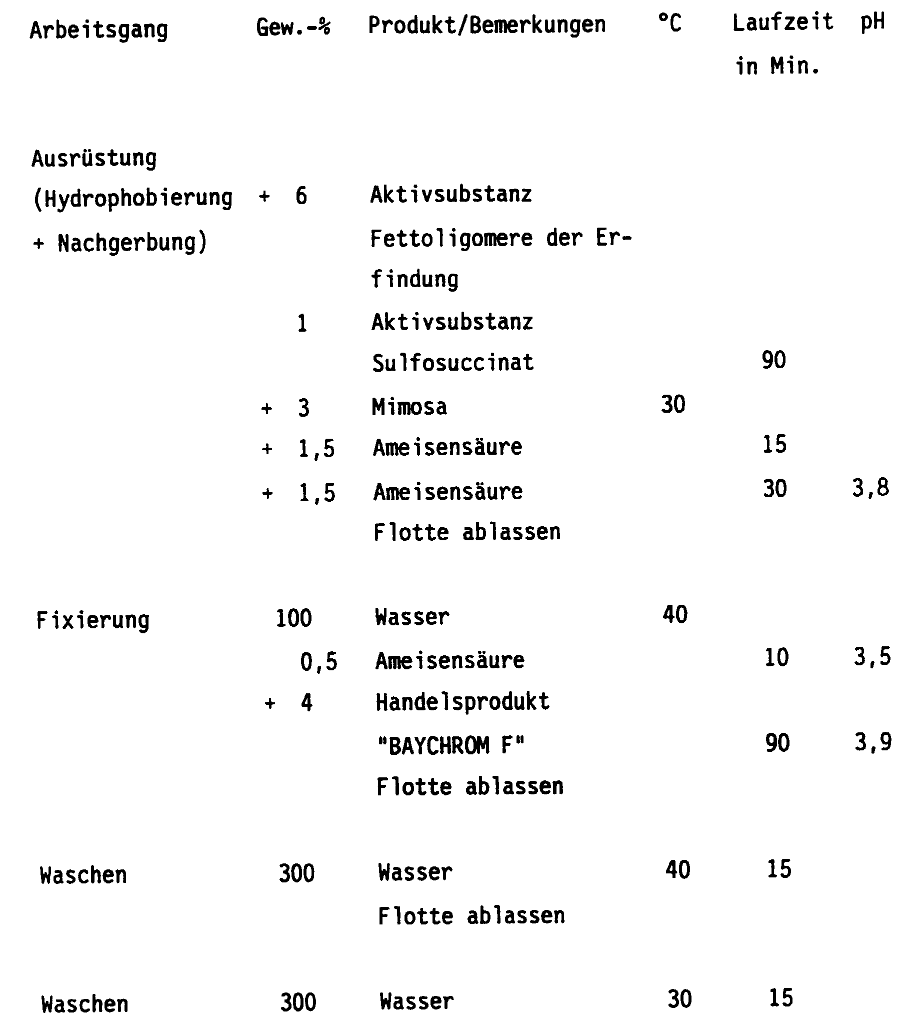

Leder über Nacht auf Bock, naß spannen, trocknen 50°C, 40 % relative Luftfeuchte, konditionieren, millen, spannen.

Die in dieser Arbeitsanweisung angegebenen Handelsprodukte sind:
"PELLUPUR 400 N" ist ein komplexaktives, dispergierendes, egalisierendes Färbereihilfsmittel
"BAYCHROM F" ist ein organisch maskierter selbstabstumpfender 50%iger basischer Chromgerbstoff

## Patentansprüche

1. Verwendung von wasserdispergierbaren und/oder wasseremulgierbaren Co-Oligomeren aus
(a) Fettcrotonaten und
(b) radikalisch copolymerisierbaren hydrophilen ethylenisch ungesättigen Säuren und/oder deren Anhydriden, die auch
(c) untergeordnete Mengen weiterer copolymerisierbarer Comonomere enthalten können
als amphiphiles Mittel zur fettenden Ausrüstung von Leder und Pelzfellen.

2. Ausführungsform nach Anspruch 1, dadurch gekennzeichnet, daß Co-Oligomere verwendet werden, die als Komponente (a) Ester beziehungsweise Estergemische aus Crotonsäure und C₁₀₋₄₀-Fettalkoholen, bevorzugt C₁₂₋₂₄-Fettalkoholen enthalten, wobei entsprechende Fettcrotonate auf Basis wenigstens überwiegend geradkettiger Fettalkohole bevorzugt sein können.

3. Ausführungsform nach Ansprüchen 1 und 2, dadurch gekennzeichnet, daß Co-Oligomere verwendet werden, die als Komponente (b) ethylenisch ungesättigte Monocarbonsäuren, ethylenisch ungesättigte Dicarbonsäuren und/oder deren Anhydride mit bevorzugt jeweils bis zu 12 C-Atomen enthalten, wobei die Dicarbonsäuren auch wenigstens anteilsweise in Form ihrer Partialderivate mit einer Carboxylgruppe und einer derivatisierten Carbonsäuregruppe, zum Beispiel als Dicarbonsäure-Halbester, vorliegen können.

4. Ausführungsform nach Ansprüchen 1 bis 3, dadurch gekennzeichnet, daß Co-Oligomere verwendet werden, die als Komponente (b) wenigstens anteilsweise Reste copolymerisierbarer aliphatischer und/oder aromatischer Sulfonsäuren enthalten, wobei die Komponente (b) auch ausschließlich durch solche Sulfonsäuren gebildet sein kann.

5. Ausführungsform nach Ansprüchen 1 bis 4, dadurch gekennzeichnet, daß Co-Oligomere verwendet werden, in denen die Komponenten (a) und (b) in Gewichtsverhältnissen - Gew.-% bezogen auf die Summe von (a) + (b) - von 30 bis 90 Teilen, vorzugsweise 35 bis 80 Teilen (a) auf 70 bis 10 Teile, vorzugsweise 65 bis 20 Teile (b) vorliegen, wobei weiterhin im Falle der Mitverwendung von Comonomeren gemäß (c) deren Anteile bevorzugt nicht mehr als 30 Gew.-%, vorzugsweise nicht mehr als 15 Gew.-% - Gew.-% hier bezogen auf die Summe von (a), (b) und (c) - beträgt.

6. Ausführungsform nach Ansprüchen 1 bis 5, dadurch gekennzeichnet, daß Co-Oligomere aus der radikalischen Copolymerisation von Fettcrotonaten mit Acrylsäure, Methacrylsäure, Maleinsäureanhydrid, Maleinsäure, Crotonsäure und/oder Fumarsäure eingesetzt werden.

7. Ausführungsform nach Ansprüchen 1 bis 6, dadurch gekennzeichnet, daß Co-Oligomere verwendet werden, bei deren Herstellung keine Kettenüberträger beziehungsweise Molgewichtsregler mitverwendet worden sind.

8. Ausführungsform nach Ansprüchen 1 bis 7, dadurch gekennzeichnet, daß Co-Oligomere mit mittleren Molekulargewichten (Molmassen) von 500 bis 30.000 g/Mol, vorzugsweise von etwa 1.000 bis 15.000 g/Mol eingesetzt werden, wobei die Verwendung der Co-Oligomeren niedrigen Molgewichtes mit beispielsweise Molmassen im Bereich von etwa 1.000 bis 4.000 g/Mol besonders bevorzugt sein kann.

9. Ausführungsform nach Ansprüchen 1 bis 8, dadurch gekennzeichnet, daß Co-Oligomere aus Fettcrotonat und Maleinsäureanhydrid eingesetzt werden, deren Maleinsäureanhydrid-Anteil durch Hydrolyse und/oder Solvolyse mit H-aktiven Komponenten zum Maleinsäure-Rest beziehungsweise Maleinsäure-Derivatrest umgewandelt worden ist.

10. Ausführungsform nach Ansprüchen 1 bis 8, dadurch gekennzeichnet, daß Co-Oligomere eingesetzt werden, die durch Co-Oligomerisation von Crotonsäure und Maleinsäureanhydrid, anschließende Veresterung der Crotonsäureanteile mit Fettalkoholen und gewünschtenfalls nachfolgende Hydrolyse beziehungsweise Solvolyse der Anhydridringe hergestellt worden sind.

11. Ausführungsform nach Ansprüchen 1 bis 10, dadurch gekennzeichnet, daß die Co-Oligomeren in Form wäßriger Dispersionen und/-oder Emulsionen eingesetzt werden, die bevorzugt auf einen schwach sauren bis schwach alkalischen pH-Bereich eingestellt worden sind.

12. Ausführungsform nach Ansprüchen 1 bis 11, dadurch gekennzeichnet, daß als amphiphile Mittel Co-Oligomere der angegebenen Art zusammen mit Emulgatoren verwendet werden, die beim Eintrag in insbesondere mineralgegerbte Leder und/oder Felle eine zusätzliche Fettung bewirken und bevorzugt gleichzeitig über saure Gruppen im gegerbten Leder beziehungsweise Fell fixiert werden können.

13. Ausführungform nach Ansprüchen 1 bis 12, dadurch gekennzeichnet, daß die Co-Oligomeren nach ihrem Eintrag in die auszurüstenden Leder und/oder Pelzfelle darin durch eine Nachbehandlung mit insbesondere Mineralgerbstoffen fixiert werden.

14. Wäßrige Dispersionen von amphiphilen Co-Oligomeren aus
(a) Fettcrotonaten und
(b) radikalisch copolymerisierbaren hydrophilen ethylenisch ungesättigten Säuren und/oder deren Anhydriden sowie gegebenenfalls
(c) weiteren hydrophilen und/oder oleophilen Comonomeren
die Gewichtsverhältnisse von (a) zu (b) im Bereich von 30 bis 90 zu 70 bis 10 Gew.-% - bezogen auf die Summe von (a) + (b) -enthalten, auf pH-Werte im Bereich von neutral bis schwach basisch eingestellt sind und insbesondere als wasserverdünnbare wäßrig-pastöse Massen mit Wertstoffgehalten im Bereich von etwa 30 bis 70 Gew.-% ausgebildet sind.

15. Wäßrige Co-Oligomer-Dispersionen nach Anspruch 14, dadurch gekennzeichnet, daß sie zusätzlich Emulgatoren und/oder niedermolekulare Fettungsmittel für die Lederzurichtung enthalten, die einen oleophilen Kohlenwasserstoffrest mit bevorzugt wenigstens 8 bis 10 C-Atomen, gegebenenfalls zusammen mit wenigstens einer Säuregruppe im Molekül enthalten und bevorzugt den nachfolgenden Klassen zugeordnet sind:
Sulfobernsteinsäure-Halbester langkettiger Fettalkohole mit insbesondere 12 bis 24 C-Atomen und/oder deren Alkylenoxid-addukte mit bevorzugt bis zu 6 Alkylenoxidresten,
Sulfobernsteinsäure-Halbester von Fettsäuremono- und/oder diglyceriden beziehungsweise deren Alkylenoxidaddukten mit bevorzugt bis zu 6 Alkylenoxidresten bei bevorzugter Kettenlänge der Fettsäure(n) im Bereich C₁₂₋₂₄,
langkettige Sulfofettsäuren, insbesondere alpha-Sulfofettsäuren des Bereichs von C₁₂₋₂₄,
innenständige Sulfonate olefinisch 1- und/oder mehrfach ungesättigter Fettsäuren mit wenigstens 12, vorzugsweise 16 bis 24 C-Atomen,
Salze einer Aminosäure mit 2 bis 6 C-Atomen und mit dem Acylrest einer gesättigten oder ungesättigten Fettsäure mit 9 bis 20 C-Atomen am Aminstickstoffatom, das gegebenenfalls zusätzlich durch Methyl substituiert ist, insbesondere Fettsäuresarkoside.

16. Wäßrige Co-Oligomer-Dispersionen nach Ansprüchen 14 und 15, dadurch gekennzeichnet, daß sie zusätzlich weitere imprägnierende und/oder hydrophobierende Lederfettungsmittel eingemischt enthalten, wobei ein bevorzugtes Wirkstoffgemisch dieser Art auf den folgenden Komponenten aufgebaut ist:
Sulfobernsteinsäure-Halbester mit C₁₂₋₂₄-Fettresten in Kombination mit Verbindungen aus der Gruppe oxidierte oder oxidierte und teilsulfierte C₁₈₋₂₆-Kohlenwasserstoffe oder C₃₂₋₄₀-Wachse, Phosphorsäuremono-C₁₂₋₂₄-Alkylester, Partialester von Polycarbonsäuren, wie Citronensäuremono-C₁₈₋₂₄-Alkylester, Partialester von Polyalkoholen, wie Sorbitan-, Glycerin- oder Pentaerythrit-C₁₈₋₂₄-fettsäureester.

17. Wäßrige Co-Oligomer-Dispersionen nach Ansprüchen 14 bis 16, dadurch gekennzeichnet, daß die erfindungsgemäßen Co-Oligomeren aus den Komponenten (a) und (b) sowie gegebenenfalls (c) wenigstens etwa 35 Gew.-%, vorzugsweise wenigstens den überwiegenden Anteil der imprägnierenden und/oder hydrophobierenden Wertstoffe in den entsprechenden Wertstoffgemischen der wäßrigen Dispersionen ausmachen.

## Claims

1. The use of water-dispersible and/or water-emulsifiable co-oligomers of
(a) fatty crotonates and
(b) radical-copolymerizable, hydrophilic ethylenically unsaturated acids and/or anhydrides which may also contain
(c) small quantities of other copolymerizable monomers
as amphiphilic preparations for the oiling of leather and skins.

2. The use claimed in claim 1, characterized in that the co-oligomers used contain as component (a) esters or ester mixtures of crotonic acid and C₁₀₋₄₀ fatty alcohols, preferably C₁₂₋₂₄ fatty alcohols, corresponding fatty crotonates based on at least predominantly linear fatty alcohols being preferable.

3. The use claimed in claims 1 and 2, characterized in that the co-oligomers used contain as component (b) ethylenically unsaturated monocarboxylic acids, ethylenically unsaturated dicarboxylic acids and/or anhydrides preferably containing up to 12 carbon atoms, the dicarboxylic acids optionally being at least partly present in the form of their partial derivatives containing a carboxyl group and a derivatized carboxylic acid group, for example as dicarboxylic acid semiesters.

4. The use claimed in claims 1 to 3, characterized in that the co-oligomers used at least partly contain residues of copolymerizable aliphatic and/or aromatic sulfonic acids as component (b), component (b) optionally being exclusively formed by such sulfonic acids.

5. The use claimed in claims 1 to 4, characterized in that co-oligomers are used in which components (a) and (b) are present in ratios by weight (% by weight, based on the sum of (a)+(b)) of 30 to 90 parts and preferably 35 to 80 parts (a) to 70 to 10 parts and preferably 65 to 20 parts (b); where comonomers (c) are used, their percentage content is preferably no more than 30% by weight and, more preferably, no more than 15% by weight (based on the sum of (a), (b) and (c)).

6. The use claimed in claims 1 to 5, characterized in that co-oligomers from the radical copolymerization of fatty crotonates with acrylic acid, methacrylic acid, maleic anhydride, maleic acid, crotonic acid and/or fumaric acid are used.

7. The use claimed in claims 1 to 6, characterized in that co-oligomers which have been produced without using chain transfer agents or molecular weight regulators are used.

8. The use claimed in claims 1 to 7, characterized in that co-oligomers with average molecular weights of 500 to 30,000 g/mole and preferably from about 1,000 to 15,000 g/mole are used, co-oligomers of low molecular weight, for example with molecular weights in the range from about 1,000 to 4,000 g/mole being particularly preferred.

9. The use claimed in claims 1 to 8, characterized in that co-oligomers of fatty crotonate and maleic anhydride, in which the maleic anhydride component has been converted into maleic acid or a maleic acid derivative by hydrolysis and/or solvolysis with H-active components, are used.

10. The use claimed in claims 1 to 8, characterized in that the co-oligomers used have been produced by co-oligomerization of crotonic acid and maleic anhydride, subsequent esterification of the crotonic acid components with fatty alcohols and, if desired, subsequent hydrolysis or solvolysis of the anhydride rings.

11. The use claimed in claims 1 to 10, characterized in that the co-oligomers are used in the form of aqueous dispersions and/or emulsions which have preferably been adjusted to a mildly acidic to mildly alkaline pH value.

12. The use claimed in claims 1 to 11, characterized in that co-oligomers of the type mentioned are used together with emulsifiers which, on introduction into - in particular - mineral-tanned leathers and/or skins, have an additional oiling effect and, at the same time, can preferably be fixed in the tanned leather or skin by acidic groups are used as the amphiphilic preparations.

13. The use claimed in claims 1 to 12, characterized in that, after introduction into the leathers and/or skins to be finished, the co-oligomers are fixed therein by an aftertreatment with, in particular, mineral tanning agents.

14. Aqueous dispersions of amphiphilic co-oligomers of
(a) fatty crotonates and
(b) radical-copolymerizable, hydrophilic, ethylenically unsaturated acids and/or anhydrides and optionally
(c) other hydrophilic and/or oleophilic comonomers
which contain ratios by weight of (a) to (b) of 30-90 to 70-10% by weight, based on the sum of (a)+(b), are adjusted to pH values in the neutral to mildly basic range and, in particular, are formulated as water-dilutable water-based pastes with active-substance contents in the range from about 30 to 70% by weight.

15. Aqueous co-oligomer dispersions a claimed in claim 14, characterized in that they additionally contain emulsifiers and/or low molecular weight leather oiling preparations which contain an oleophilic hydrocarbon radical preferably containing at least 8 to 10 carbon atoms, optionally together with at least one acid group in the molecule, and which are preferably assigned to the following classes:
sulfosuccinic acid semiesters of long-chain fatty alcohols containing in particular 12 to 24 carbon atoms and/or alkylene oxide adducts thereof preferably containing up to 6 alkylene oxide units,
corresponding sulfosuccinic acid semiesters of fatty acid mono- and/or diglycerides or alkylene oxide adducts thereof preferably containing up to 6 alkylene oxide units for a preferred chain length of the fatty acid(s) of C₁₂₋₂₄,
long-chain sulfofatty acids, more particularly corresponding alpha-sulfofatty acids preferably containing 12 to 24 carbon atoms,
internal sulfonates of mono- and/or polyolefinically unsaturated fatty acids containing at least 12 and preferably 16 to 24 C atoms,
salts of an amino acid containing 2 to 6 carbon atoms attached at the amine nitrogen atom to the acyl group of a saturated or unsaturated fatty acid containing 9 to 20 carbon atoms, which may be additionally substituted by methyl, more particularly fatty acid sarcosides.

16. Aqueous co-oligomer dispersions as claimed in claims 14 to 15, characterized in that they additionally contain other impregnating and/or hydrophobicizing leather oiling agents, a preferred mixture of this type being based on the following components: sulfosuccinic acid esters with C₁₂₋₂₄ fatty residues in combination with compounds from the group of oxidized or oxidized and partly sulfonated C₁₈₋₂₆ hydrocarbons or C₃₂₋₄₀ waxes, phosphoric acid mono-C₁₂₋₂₄-alkyl esters, partial esters of polycarboxylic acids, such as citric acid mono-C₁₈₋₂₄-alkyl esters, partial esters of polyalcohols, such as sorbitan, glycerol or pentaerythritol C₁₈₋₂₄ fatty acid esters.

17. Aqueous co-oligomer dispersions claimed in claims 14 to 16, characterized in that the co-oligomers according to the invention of components (a) and (b) and optionally (c) make up at least about 35% by weight and preferably at least the predominant part of the impregnating and/or hydrophobicizing active substances in the corresponding active-substance mixtures of the aqueous dispersions.

## Revendications

1. Utilisation de co-oligomères dispersibles dans l'eau ou émulsionnables dans l'eau à partir :
(a) de crotonates gras et,
(b) d'acides et/ou de leurs anhydrides radicalairement co-polymérisables hydrophiles éthyléniquement non saturés, qui
(c) peuvent contenir aussi des quantités inférieures d'autres comonomères copolymérisables,
En tant qu'agent amphiphile pour l'apprêt graissant de cuirs et de peaux.

2. Forme de réalisation selon la revendication 1, caractérisée en ce qu'on utilise des co-oligomères, qui contiennent comme composant (a) des esters ou des mélanges d'esters d'acide crotonique et d'alcools gras en C₁₀₋₄₀, de préférence des alcools gras en C₁₈₋₂₄, tandis que des crotonates correspondants à base au mois principalement d'alcools gras à chaîne droite peuvent être préférés.

3. Forme de réalisation selon les revendications 1 et 2, caractérisée en ce que des co-oligomères sont utilisés, qui contiennent comme composant (b) des acides monocarboxyliques éthyléniquement non saturés, des acides dicarboxyliques éthylèniquement non saturés et/ou leurs anhydrides avec respectivement jusqu'à 12 atomes de C, les acides dicarboxyliques pouvant être présents aussi au moins partiellement sous la forme de leurs dérivés partiels avec un groupe carboxyle et un groupe d'acide carboxylique dérivatisé, par exemple comme demi-ester d'acide dicarboxylique.

4. Forme de réalisation selon les revendications 1 à 3, caractérisée en ce que des co-oligomères sont utilisés qui contiennent comme composant (b) au moins partiellement des radicaux d'acides sulfuriques copolymérisables aliphatiques et/ou aromatiques, le composant (b) pouvant être formé aussi exclusivement par ces acides sulfoniques.

5. Forme de réalisation selon les revendications 1 à 4, caractérisée en ce qu'on utilise des co-oligomères, dans lesquels les composants (a) et (b) sont présents dans des rapports de poids, % en poids rapportés à la somme de (a) + (b), de 30 à 90 parties, de préférence de 35 à 80 parties de (a) à 70 jusqu'à 10 parties, de préférence 65 à 20 parties de (b), en outre dans le cas de la co-utilisation de comonomères selon (c) leurs proportions n'atteignent pas de préférence plus de 15 % en poids, % en poids rapporté ici à la somme de (a), (b) et (c).

6. Forme de réalisation selon les revendications 1 à 5, caractérisée en ce qu'on met en oeuvre des co-oligomères de la copolymérisation radicalaire de crotonates gras avec de l'acide acrylique, de l'acide méthacrylique, de l'anhydride maléique, de l'acide maléique, de l'acide crotonique et/ou de l'acide fumarique.

7. Forme de réalisation selon les revendications 1 à 6, caractérisée en ce que des co-oligomères sont utilisés dans la production desquels n'ont pas été co-utilisés des transformateurs de chaînes ou des régulateurs de poids molaire.

8. Forme de réalisation selon les revendications 1 à 7, caractérisée en ce qu'on met en oeuvre des co-oligomères ayant des poids molaires moyens (masses molaires) de 500 à 30.000 g/mol, de préférence d'environ 1000 à 15.000 g/mol, parmi lesquels l'utilisation des co-oligomères de bas poids molaire avec par exemple des masses molaires dans la zone d'environ 1000 à 4000 g/mol pouvant être particulièrement préférée.

9. Forme de réalisation selon les revendications 1 à 8, caractérisée en ce qu'on met en oeuvre des co-oligomères de crotonate gras et d'anhydride maléique, dont la proportion d'anhydride maléique a été convertie par hydrolyse et/ou solvolyse avec des composants actifs en H en radical d'acide maléique ou en radical de dérivé d'acide moléique.

10. Forme de réalisation selon les revendications 1 à 8, caractérisée en ce qu'on met en oeuvre des co-oligomères, qui ont été produits par co-oligomérisation d'acide crotonique et d'anhydride maléique, ensuite estérification des proportions d'acide crotonique avec des alcools gras et si on le désire hydrolyse consécutive ou solvolyse des composés cycliques d'anhydride.

11. Forme de réalisation selon les revendications 1 à 10, caractérisée en ce que les co-oligomères sont mis en oeuvre sous forme de dispersions aqueuses et/ou d'émulsions, qui sont ajustées de préférence à une zone de pH d'acide faible à alcaline faible.

12. Forme de réalisation selon les revendications 1 à 11, caractérisée en ce que comme agents amphiphiles on utilise des co-oligomères du type indiqué conjointement avec des émulsionnants, qui provoquent lors de leur entrée dans du cuir et/ou des peaux en particulier tannés par voie minérale un graissage additionnel et de préférence en même temps peuvent être fixés par des groupes acides dans le cuir ou la peau tannée.

13. Forme de réalisation selon les revendications 1 à 12, caractérisée en ce que les co-oligomères après leur entrée dans les cuirs et/ou peaux à apprêter sont fixés dedans par un traitement ultérieur avec en particulier des matières de tannage minérales.

14. Dispersions aqueuses de co-oligomères amphiphiles à partir de :
(a) de crotonates gras et,
(b) d'acides et/ou de leurs anhydrides radicalairement hydrophiles éthyléniquement non saturés et/ou leurs anhydrides ainsi qu'éventuellement,
(c) d'autres comonomères hydrophiles et/ou oléophiles qui contiennent des rapports de poids de (a) à (b) dans la zone de 30 à 90 à 70 à 10 % en poids, rapportés à la somme de (a) + (b), sont ajustés à des valeurs de pH dans la zone de neutre à faiblement basique et sont réalisés en particulier en masses pâteuses-aqueuses diluables dans l'eau avec des teneurs en matières de valeur dans la zone d'environ 30 à 70 % en poids.

15. Dispersions aqueuses de co-oligomères selon la revendication 14, caractérisées en ce qu'elles contiennent additionnellement des émulsionnats et/ou des produits de graissage à faible poids moléculaire pour le corroyage du cuir, qui contiennent un radical hydrocarbure oléophile avec de préférence au moins 8 à 10 atomes de C, éventuellement ensemble avec au moins un groupe acide dans la molécule et de préférence sont associées aux classes suivantes :
demi-esters d'acide sulfosuccinique d'alcools gras à chaîne longue avec en particulier 12 à 24 atomes de C et/ou leurs produits d'addition d'oxyde d'alkylène avec de préférence jusqu'à 6 radicaux d'oxyde d'alkylène,
demi-esters d'acide sulfosuccinique de mono et/ou diglycérides d'acide gras ou leurs produits d'addition d'oxyde d'alkylène avec de préférence jusqu'à 6 radicaux d'oxyde d'alkylène avec une longueur de chaîne préférée du ou des acide(s) gras dans la zone C₁₂₋₂₄,
acides gras sulfoniques à longue chaîne, en particulier acides gras alpha-sulfoniques de la zone de C₁₂₋₂₄,
sulfonates stables à l'intérieur d'acides gras oléfiniquement mono et/ou plusieurs fois insaturés avec au moins 12, de préférence 16 à 26 atomes de C,
sels d'un aminoacide avec de 2 à 6 atomes de C, et avec le radical acyle d'un acide gras saturé ou non saturé avec de 9 à 20 atomes de C sur l'atome d'azote aminé, qui est substitué éventuellement en plus par du méthyle, en particulier des sarcosides d'acide gras.

16. Dispersions aqueuses de co-oligomères selon les revendications 14 et 15, caractérisées en ce qu'elles contiennent insérées en mélange d'autres agents en plus de graissage du cuir imprégnants et/ou imperméabilisants, tandis qu'un mélange de matière active préféré de ce type est structuré sur les composants suivants :
demi-esters d'acide sulfosuccinique avec des radicaux gras C₁₂₋₂₄ en combinaison avec des composés du groupe oxydé des hydrocarbures en C₁₈₋₂₆ oxydés et partiellement sulfatés ou des cires en C₃₂₋₄₀, des mono esters d'alkyle en C₁₂₋₂₄ d'acide phosphorique, des esters partiaux de polyacides carboxyliques, comme des monoesters d'alkyle en C₁₈₋₂₄ d'acide citrique, des esters partiaux de polyalcools, comme des esters d'acide gras en C₁₈₋₂₄ de sorbitane, de glycérol ou pentaérythritol.

17. Dispersions aqueuses de co-oligomères selon les revendications 14 à 16, caractérisées en ce que les co-oligomères selon l'invention constituent des composants (a) et (b) ainsi qu'éventuellement (c) au moins environ 35 % en poids, de préférence au moins la partie principale des matières valables imprégnantes et/ou imperméabilisantes dans les mélanges de matière de valeur correspondants des dispersions aqueuses.
